# EUROPÄISCHE PATENTANMELDUNG

(11) **EP 2 204 709 A2**
(43) Veröffentlichungstag der Anmeldung: **07.07.2010**
(21) Anmeldenummer: 09167230.3
(22) Anmeldetag: 05.08.2009
(51) Int. Cl.: G05B 19/4065

(54) **Maschinensteuerung für eine NC-Werkzeugmaschine**

(30) Priorität: 22.12.2008 DE 102008064172
(71) Anmelder: Rolls-Royce Deutschland Ltd & Co KG, 15827 Dahlewitz (DE)
(72) Erfinder: Kappmeyer, Gregor, 61352, Bad Homburg (DE); Pieczeit, Wolfgang, 65599, Dornburg (DE)

(57) **Zusammenfassung**

Bei einer NC-Werkzeugmaschine ist in das vorgegebene Programm zur Steuerung der Werkzeugmaschine ein Unterprogramm integriert, mit dem in einem Bearbeitungszyklus oder auch in mehreren Bearbeitungszyklen bzw. in bestimmten Längen- und Durchmesserbereichen des Werkstücks, die durch Werkzeugschwingungen gekennzeichnet sind und eine verminderte Bauteilqualität zur Folge haben, eine periodische Änderung mindestens eines Schneidwerkzeugparameters erfolgt. In diesen sensiblen Bearbeitungsbereichen werden aufgrund der periodischen Schneidparameteränderungen selbsterregte Werkzeugschwingungen vermieden, so dass der Werkzeugverschleiß verringert und die Bauteilqualität verbessert werden kann. Dieser Eingriff in das Bearbeitungsprogramm ist zudem dokumentierbar und kann bei jedem Werkstück - unabhängig von der Erfahrung und der subjektiven Einschätzung der Bedienungsperson - identisch wiederholt werden.

## Beschreibung

Die Erfindung betrifft eine Maschinensteuerung für eine nach einem vorgegebenen Programm gesteuerte spanende Werkzeugmaschine.

Bei der Vorbearbeitung und auch bei der Fertigbearbeitung von Werkstücken mittels programmgesteuerter Werkzeugmaschinen kann es zu Werkzeugschwingungen kommen, durch die in kritischen Werkstuckbereichen bzw. Bearbeitungszyklen die Bearbeitungsgenauigkeit und die Qualität des Werkstücks beeinträchtigt sowie die Standzeit des Werkzeugs verringert werden können. Als kritische Werkstückbereiche sind im wesentlichen solche Bereiche: zu verstehen, in denen die Werkzeugeingriffsbedingungen und die daraus resultierenden zwischen Werkstück und Werkzeug entstehenden Bearbeitungskräfte in Verbindung mit der dynamischen Steifigkeit des bearbeiteten Werkstückbereichs zu Werkzeug- oder Werkstuckschwingungen führen können. Derartige Schwingungen können jedoch von einer erfahrene Bedienungsperson erkannt werden, die dann - zumindest bei der Vorbearbeitung - aufgrund ihrer Erfahrung in das Programm und damit den Spanung-svorga-ng eingreifen kann und die Spanungsbewegung, das heißt die Schnittbewegung bzw. die Schnittgeschwindigkeit (Drehzahl) und/oder die Vorschubbewegung bzw. die Vorschubgeschwindigkeit des Werkzeugs entlang dem Werkstück manuell, beispielsweise durch Betätigung eines Drehzahl- und Vorschubpotentiometers, so verändern kann, dezs5 die Vibrationen minimiert werden. Das erfordert jedoch die ständige Anwesenheit einer - zudem sehr erfahrenen - Bedienungsperson an der betreffenden Werkzeugmaschine. Eine Bedienung noch anderer Werkdurch ein und dieselbe Bedienungsperson ist nicht möglich. Der manuelle Eingriff der Bedienungsperson ist außerdem insofern nachteilig, als die dadurch bewirkte Änderung der Schnittparameter nicht dokumentiert werden kann und bei nachfolgend bearbeiteten gleichen Werkstücken nicht in derselben Art genau wiederholbar ist. Zur Vermeidung von Werkzeugschwingungen während der spangebenden Bearbeitung sind auch automatisierte Systeme unter Verwendung von Schwingungs- und Körperschallsensoren bekannt. Die Anwendung derartiger - sensorqestützter - komplexer Regelsysteme ist jedoch mit einem hohen Aufwand für die Parameterermittlung und Kalibrierung verbunden.

Der Erfindung liegt daher die Aufgabe zugrunde, die maschinensteuerung für eine nach einem vorgegebenen Programm arbeitende Werkzeugmaschine mit geringem Aufwand so weiterzubilden, dass Werkzeugschwingungen unabbängig von der Bedienungsperson vermieden werden und höhere Werkzeugstandzeiten sowie eine gleichbleibende, hohe Bauteilqualität erzielt werden.

Erfindungsgemäß wird die Aufgabe mit einer Maschinensteuerung gemäß den Merkmalen des Patentanspruchs 1 gelöst. Zweckmäßige Weiterbildungen der Erfindung sind Gegenstand der Unteransprüche.

Der Grundgedanke der Erfindung besteht mit anderen Worten in mindestens einem in das vorgegebene Programm zur Steueng der Werkzeugmaschine integriertes Unterprogramm, mit dem in einem Bearbeitungszyklus oder auch in mehreren Bearbeitungszyklen in bestimmten Längen- und Durchmesserbereichen des Werkstücks, die durch Werkzeugschwingungen gekennzeichnet sind und eine verminderte Bauteilqualität zur Folge haben, eine periodische Änderung' mindestens eines Schneidwerkzeugparameters erfolgt. In diesen sensiblen Bearbeitungsbereichen werden aufgrund der periodischen Schneidparameteränderungen selbsterregte Werkzeugschwingungen vermieden, so das der Werkzeugverschleiß verringert und die Bauteilqualität verbessert werden kann. Dieser programmgesteuerte Eingriff in das Bearbeitungsprogramm ist zudem dokumentierbar und kann bei jedem Werkstück - unabhängig von der Erfahrung und der subjektiven Einschätzung der Bedienungsperson - identisch wiederholt werden. Da kein manueller Eingriff in das Bearbeitungsprogramrn erforderlich ist, kann Bedienungspersonal eingespart werden.

Die Schneidwerkzeugpararmeter betreffen vorzugsweise die Schnittgeschwindigkeit, die Schnitttiefe und/oder die Vorschubgeschwindigkeit des Werkzeugs und können frei gewählt werden, wobei die periodische Veränderung des Vorschubs ohne Einfluss auf die Bauteilgeometrie ist während durch periodische Änderung der Schnitttiefe der Verschleiß an der iYer'kzeugscl-1neide verringert und gleichzeitig die Bauteilgeometrie beeinflusst wird

in weiterer Ausgestaltung der Erfindung erfolgen die Erhöhung und die Verringerung des jeweiligen Schneidparameters in jeder der aufeinander folgenden Perioden in gleichen oder in unterschiedlichen Zeiträumen. Die Größe der Parameteränderungen in aufeinander folgenden Perioden kann gleich oder von Periode zu Periode unterschiedlich sein.

Gemäß einem weiteren Merkmal der Erfindung ist der Verlauf der periodischen Parameteränderung wellenförmig oder linear steigend und fallend.

Die Erfindung wird in einem Ausführungsbeispiel anhand der Zeichnung, in der
- Fig. 1: eine Teilansicht einer auf einer NC-Werkzeugmaschine bearbeiteten Rotorscheibe für ein Gasturbinentriebwerk;
- Fig. 2: eine Einzelheit "X" nach Fig. 1, die in vergrößerter schematischer Darstellung einen bestimmten sensiblen Bearbeitungsbereich der Rotorscheibe während eines ersten und eines zweiten Bearbeitungsschritts wiedergibt;
- Fig. 3: eine graphische De.xstel1ung der periodischen Änderung der Vorschubparameter während der Bearbeitungszeit;
- Fig. 4: eine graphische Darstellung der periodischen Änderung der Schnittiefe und der konstanten Schnitttiefe während eines ersten bzw. zweiten Bearbeitungsschritts; und

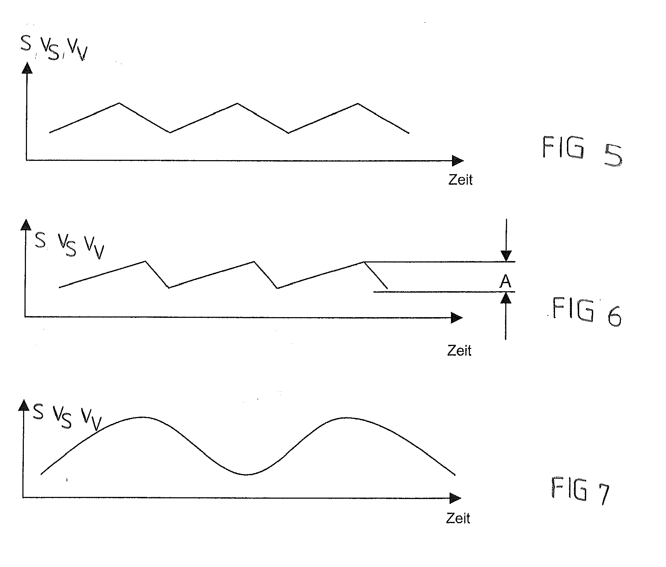

- Fig. 5 bis 7: verschiedene Verlaufsprofile der periodischen Änderung- der Spaiiungsparameter (Schnittgeschwindigkeit, Schnitttiefe, vorschubgeschwindigkeit) während der spangebenden Bearbeitung eines 1.Jerk.sriic;k;5 ;
zeigt, näher erläutert..

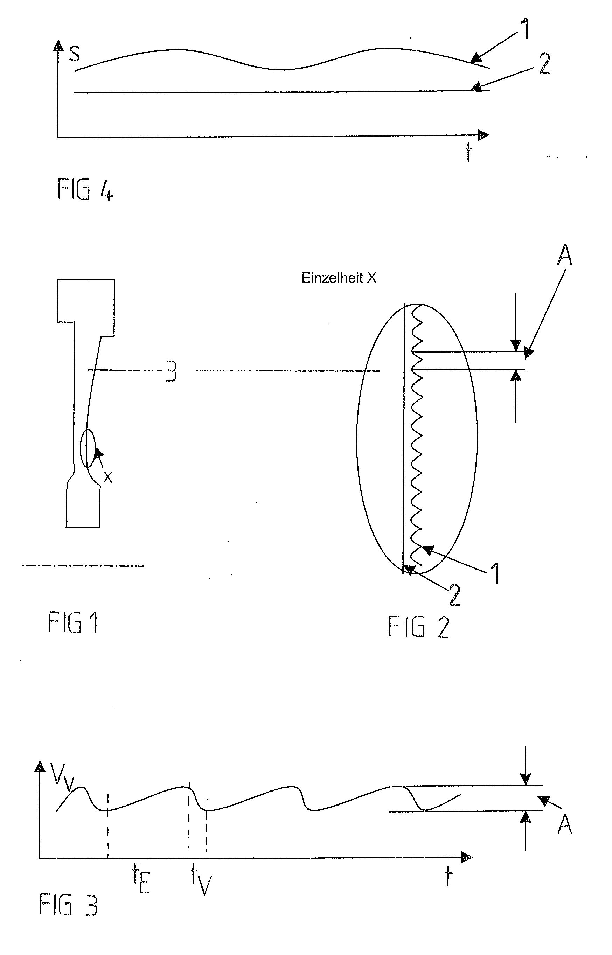

Die Figuren 1. und 2 zeigen eine Teilansicht eines zu bearbeitenden Werkstücks 3, hier die Rotorscheibe einer Fluggasturbine, währänd eines ersten Schnitts 1, in dem, wie Fig. 4 zeigt, die Schnitttiefe "s" periodisch, hier sinusförmig, erhöht und verringert wird, und während eines zweiten Schnitts 2, in dem die Schnitttiefe "s" konstant bleibt. GleichermaSen kann im ersten Schnitt 1 die Vorschubgeschwindigkeit "vᵥ" (mm/min) des Werkzeugs gemäß dem in Fig. 3 gezeigten Verlauf im ersten Schnitt 1 periodisch geändert werden und jeweils im zweiten Schnitt 2 konstant bleiben. Während die Erhöhung und die Verringerung der Schnitttiefe "s" im ersten Schnitt 1 jeweils im gleichen Zeitraum "t_{E} = t_{V}" abläuft, erfolgt die Erhöhung der Vorschubgeschwindigkeit in einem deutlich längeren Zeitraum als die Verringerung der Vorschubgeschwindigkeit "t_{E} >> t_{V}". Die zuvor beschriebene periodische Parameteränderung erfolgt unabhängig von der Bedienungsperson über Steuerungscodes eines in das NC-Programm integrierten Unterprogramms.

Die Erfindung ist selbstverständlich nicht auf das in den Figuren 1 bis 3 wiedergegebene Ausführungsbeispiel beschränkt. Neben der Schnitttiefe "s" und der Vorschubgeschwindikeit "vᵥ" kann auch die Drehzahl (u/min) bzw. die Schnittgeschwindigkeit "vₛ" periodisch geändert werden, um Werkzeugschwingungen zu vermeiden und die Bauteilqualität zu verbessern. Die Änderung der jeweiligen Schneidparameter kann einzeln oder in Kombination von zwei oder mehreren Parametern erfolgen. Auch der Zeitraum "t_{E}, t_{V}", in dem die Erhöhung oder Verringerung des betreffenden Parameters stattfindet, oder die Größe des Änderungswertes, das heißt die Amplitude "A" der periodischen Änderung, kann variieren. Darüber hinaus kann der Verlauf der Änderung unterschiedlich sein, beispielsweise sinusförmig oder linear steigend und fallend. Schließlich kann auch die Größe der Parameteränderung "A" von Periode zu Periode unterschiedlich sein oder periodisch wechseln. Die Art und Größe der Pa.ramet.eranderungen oder das Susam" menwirken unterschiedlicher Parameter richtet sich nach den bauteilspezifischen Erfordernissen (Material, Dimensionierung, Form, Festigkeitseigenschaften. Während durch eine variation des Vorschubs die Bauteilgeometrie nicht verändert wird, wird durch eine periodische Änderung der Schnitttiefen die Bauteilgeometrie verändert, aber gleichzeitig werden kritische Verschleißmerkmale am Werkzeug reduziert.

### Bezugszeichenliste

- 1: erster Schnitt
- 2: zweiter Schnitt
- 3: Werkstück
- S: Schnitttiefe
- t_{E}: der Parametererhöhung
- t_{V}: Zeitraum der Parasteterverringerung
- Vᵥ: Vorschubgeschwindigjkeit
- Vₛ: Schnittgeschwindigkeit
- A: Amplitude/Große der Parameteränderung

## Patentansprüche

1. Maschinensteuerung: für eine nach einem vorgegebenen Programm gesteuerte spanende Werkzeugmaschine, **gekennzeichnet durch** ein zur Vermeidung von Werk" zeugschwingungen und zur Verbesserung der Bauteilqualität in das Programm integriertes, in mindestens einem vorgegebenen sensiblen Bearbeitungszyklus wirksames Unterprogramm mit Steuerungscodes zur periodischen Änderung mindestens eines Schneidparameters

2. Maschinensteuerung nach Anspruch 1, **dadurch gekennzeichnet, dass** die Schneidparameter die Schnittgeschwindigkeit (vₛ), die Schnitttiefe (s) und/oder die Vorschubgeschwindigkeit (vᵥ) des Werkzeugs betreffen.

3. Maschinensteuerung nach Anspruch 1, **dadurch gekennzeichnet, dass** die Erhöhung und die Verringerung des jeweiligen Schneidparameters in jeder der aufeinander folgenden Perioden in gleichen oder in unterschiedlichen Zeiträumen (T_{E}, T_{V}) erfolgt.

4. Maschinensteuerung nach Anspruch 1, **dadurch gekennzeichnet, dass** die Größe der Parameteränderungen (A) in aufeinander folgenden Perioden gleich oder von Periode zu Periode unterschiedlich ist.

5. M-aschir,-ensteuerung nach Anspruch 1, **dadurch gekennzeichnet, dass** der Verlauf der periodischen Parameteränderung wellenförmig oder linear steigend und fallend ist.
